# EUROPEAN PATENT APPLICATION

(11) **EP 1 261 090 A1**
(43) Date of publication of application: **27.11.2002**
(21) Application number: 01901483.6
(22) Date of filing: 19.01.2001
(51) Int. Cl.: H02B 13/035, H02G 5/06

(54) **BUSBAR CONTAINER AND METHOD OF ASSEMBLING THE SAME, AND GAS INSULATION SWITCH USING BUSBAR CONTAINER**

(30) Priority: 24.02.2000 JP 2000052211
(71) Applicant: Hitachi, Ltd., Chiyoda-ku, Tokyo 101-8010 (JP)
(72) Inventor: AOYAGI, Kenji, c/o Kokubu Adm Div of Hitachi Ltd, Hitachi-shi, Ibaraki 316-0035 (JP); OMORI, Takashi, c/o Kokubu Admi Div of Hitachi Ltd, Hitachi-sshi, Ibaraki 316-0035 (JP); TANAKA, Toyokazu, c/o Kokubu Adm Div of Hitachi Lt, Hitachi-shi, Ibaraki 316-0035 (JP)
(74) Representative: Strehl Schübel-Hopf & Partner
(86) International application number: JP0100372
(87) International publication number: WO01063714

(57) **Abstract**

A bus container, its assembling method and a gas-insulated switchgear, in which gas treating working in a factory and at a site is reduced, an operation is made simple, and a process is shortened. In the case of connection of a container (101) and a container (102), a conductor (103) of spherical shape is kept in contact with and fixed to a contact (102f), the container (101) is caused to approach to the container (102), the conductor (103) is joined to a contact (101f). Before connection, a valve (108) is tightly contacted with a center conductor (102e) by the force of a spring (109), however, as the container (101) and the container (102) are approached, the tip of the valve (108) is brought into contact with the center conductor (101e), the spring is compressed, the valve (108) and the center conductor are separated, an insulating gas of high pressure in the container (102) presses the air existing in the connection portion (107) out of the container through a opening hole formed in the center conductor (102e) before flanges (101a) and (102a) are connected, and the connection portion is filled with the insulating gas.

## Description

### TECHNICAL FIELD

The present invention relates to a bus container and a assembling method of the bus container and, more particularly, to a bus container which is suitable for installation under the condition that an insulating gas is enclosed in the container and an assembling method of the bus container.

### BACKGROUND OF THE ART

A conventional method of assembling a gas-insulated switchgear is disclosed in JP A 5-30711.

In this prior art, an insulating gas is enclosed in a first pipe line forming a main bus of a gas-insulated switchgear, a first insulation spacer of a shape convex to a second pipe line side is connected to an end of the first pipe line, a second insulation spacer of a concave shape taken as a concave when viewed from the first pipe line side is connected to an end of the second pipe line in which an insulating gas is enclosed in a similar manner. The first pipe line and the second pipe line are connected end to end to each other under the condition that the convex portion of the first insulation spacer is fitted in the concave portion of the second insulation spacer, whereby the main bus is formed.

In this prior art, it is described that the main bus of the gas-insulated switchgear can be built only by filling the insulating gas in each pipe line in a factory and then fitting the pipe lines one to the other at a site.

However, in the disclosed method, when the two pipe lines are fitted, they have been fitted under the condition that air exists in the fitted portion, whereby it is impossible to secure insulation between the pipe lines and the conductors because of existence of air at the fitting portion and it is difficult to build a main bus in which the fitting portion is kept insulated.

An object of the present invention is to provide a bus container and an assembling method of the bus container in which, even in a gas-insulated switchgear constructed by using bus gas containers filled with an insulating gas in advance and assembling them at a site, the insulation performance of connection portions is raised and the working time at the site can be shortened.

### DISCLOSURE OF THE INVENTION

In order to achieve the above object, a bus container according to the present invention comprises
at least two bus gas containers, each of which has an open end and encloses therein an insulating gas, bus conductors contained in each of the bus gas containers, and spacers each supporting the bus conductors to the bus gas container, for example, so as to close the open end of the bus container, and the bus container is characterized in that the bus gas containers are connected end to end, and a plurality of said bus conductors in one of the gas containers and a plurality of bus conductors in the other bus gas container are connected end to end, respectively, connection portions of the bus conductors each include center conductors at ends of the bus conductors, and a connecting conductor connecting the bus conductors arranged end to end, and surroundings of the connecting conductors are filled with the insulating gas.

Further, an assembling method according to the present invention in order to achieve the above object assembles a bus container by connecting a plurality of bus gas containers in which bus conductors and an insulating gas are contained and the bus conductors, and the method is characterized in that the bus conductors are connected under the condition that the insulating gas is enclosed in the bus gas containers while introducing the insulating gas in the bus gas container into the connection portions, and when the connection is finished, the gas is intervened in the connection portions.

Further, an assembling method according to the present invention in order to achieve the above-mentioned object assembles a bus container by connecting a plurality of bus gas containers in which bus conductors and an insulating gas are contained, and the bus conductors, and the method is characterized in that the bus gas containers are connected end to end and the bus conductors contained in one of the bus gas containers and bus conductors contained in another of the bus gas containers are connected end to end to each other under the condition that the insulating gas is enclosed in the bus gas containers, air existing in the connection portions of the bus conductors and the connection portion of the bus gas containers is extracted therefrom after the connection, and then the insulating gas is introduced into the connection portions and hermetically sealed.

### BRIEF DESCRIPTION OF DRAWINGS

Fig. 1 is a sectional view of a structure of the whole connection portion of a gas-insulated switchgear of a first embodiment of the present invention;
Fig. 2 is a circuit diagram of the gas-insulated switchgear of the embodiment of the present invention;
Fig. 3 is a sectional view taken along A-A in the gas-insulated switchgear of Fig. 2;
Fig. 4 is an enlarged sectional view of a part of Fig. 1, showing a structure of part of the gas-insulated switchgear before connection thereof;
Fig. 5 is an enlarged sectional view of a part of Fig. 1, showing the structure after the connection of the gas-insulated switchgear;
Fig. 6 is a sectional view of a structure of the whole connection portion of a gas-insulated switchgear of a second embodiment of the present invention;
Fig. 7 is an enlarged view of a part of Fig. 6, showing the structure after the connection of the gas-insulated switchgear; and
Fig. 8 is a sectional view of a structure of connection portion of a gas-insulated switchgear of another embodiment of the present invention.

### DESCRIPTION OF EMBODIMENT OF THE INVENTION

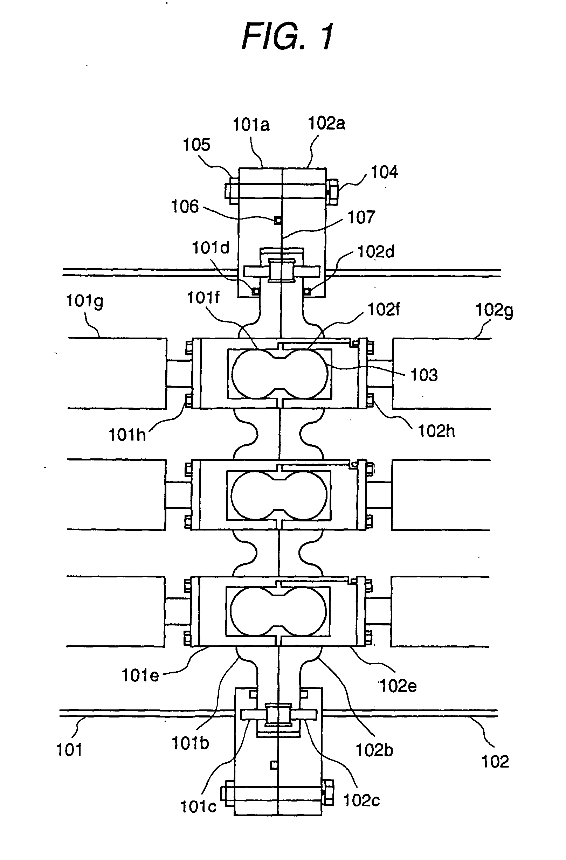

Hereunder, an embodiment of the present invention will be described, referring to Figs. 1 to 5.

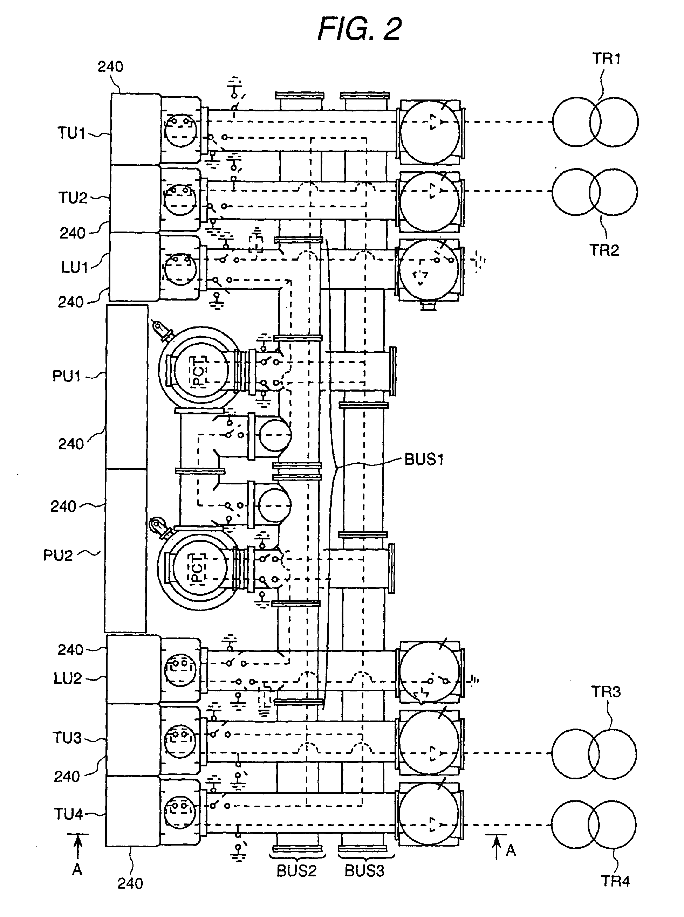

Fig. 2 is a single line connection diagram of an ultra high receiving transformer equipment for civil requirements in which a bus on a secondary side of a combined voltage current transformer of a gas-insulated switchgear of duel communication receiving, 2 metering and 4 bank is made into double buses. In the gas-insulated switchgear of this embodiment, two receiving units LU1, LU2 and combined voltage current transformer units PU1, PU2 and 4 transformer side units TU1, TU2, TU3, TU4 are provided. The receiving unit LU1 and receiving unit LU2, the combined voltage current transformer unit PU1 and combined voltage current transformer unit PU2, the transformer side unit TU1 and transformer side unit TU4, and the transformer side unit TU2 and transformer side unit TU3 each are constructed symmetrically with respect to a line, so that only each one side of them will be explained.

As for the receiving unit LU2, only the case of cable leading-in is shown, a main circuit conductor, which is introduced to a cable head through a current transformer, is connected to one end of a circuit breaker 219 arranged on the back side of an operation cubicle 240. The other end of the circuit breaker 219 is connected to a disconnecting circuit. Between the cable head and the disconnecting circuit, one end of an earth switch the other end of which is grounded is connected to an end of an arrester the other end of which is grounded through an arrester-separation device. Further, earth switches are connected to both end of the circuit breaker 219, respectively.

The combined voltage current transformer unit PU2 has a combined voltage current transformer PCT which is connected, at each of both sides thereof, to one end of an earth switch of which the other end is connected to the disconnecting circuit. The transformer side unit TU4 is constructed by connecting one end of the circuit breaker to one end of a disconnecting circuit 250, 252 the other end of which is connected to one end of an earth switch 260, 262 of which the other end is grounded, and connecting the other end of the circuit breaker to one end of an earth switch 220, the other end of which is grounded, and the transformer side unit TU4 is connected to a transformer TR4 through the cable head 221.

A transformer side end of the receiving unit LU2 is connected to the combined voltage current transformer unit PU2 by a connecting conductor having a disconnecting circuit and an earth switch grounded at one end thereof. A power receiving side end of the transformer side unit TU3 is connected to the combined voltage current transformer units PU2 by a connecting conductor having a disconnecting circuit and an earth switch grounded at one end thereof.

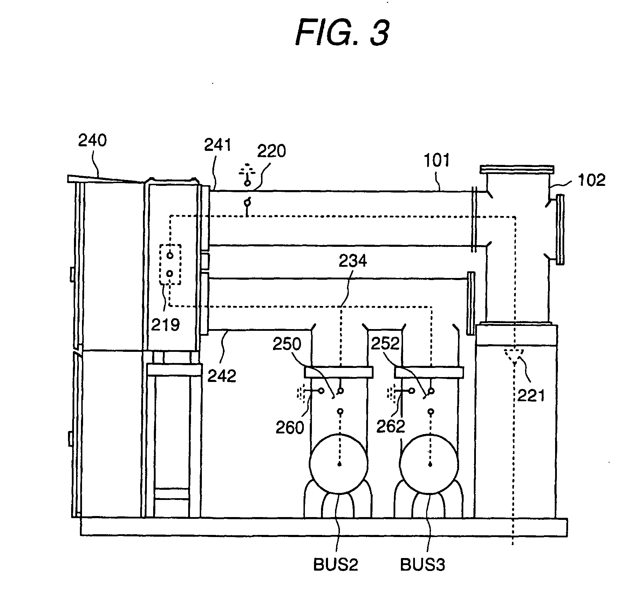

Fig. 3 is a sectional view taken along A-A in Fig. 2, and shows side views of the transformer side units TU1 to TU4. A pair of, upper and lower, leading portions 241 and 242 are provided on a switchgear 219 arranged on a back side of an operation cubicle 240 on the opposite side to the operation cubicle 240. The lead portion 241 provided on the upper side is connected to a cable head 221 through an earth switch 220 and the lead portion 242 provided on the lower side is branched at a branch portion 234 branching in combined voltage current transformer secondary bus directions, and the branched lead portions are connected to the combined voltage current secondary buses BUS 2, BUS 3 through disconnecting switches 250, 252 each having an earth switch 260, 262, respectively.

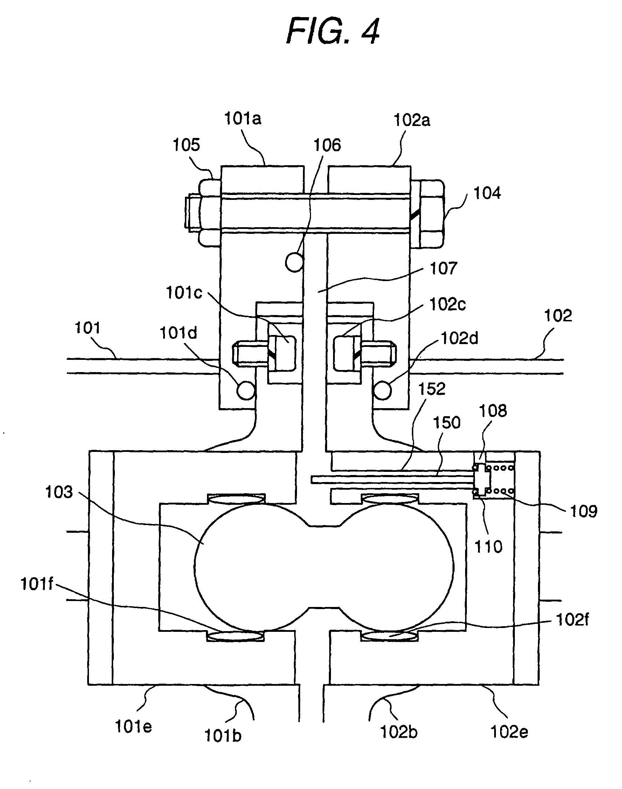

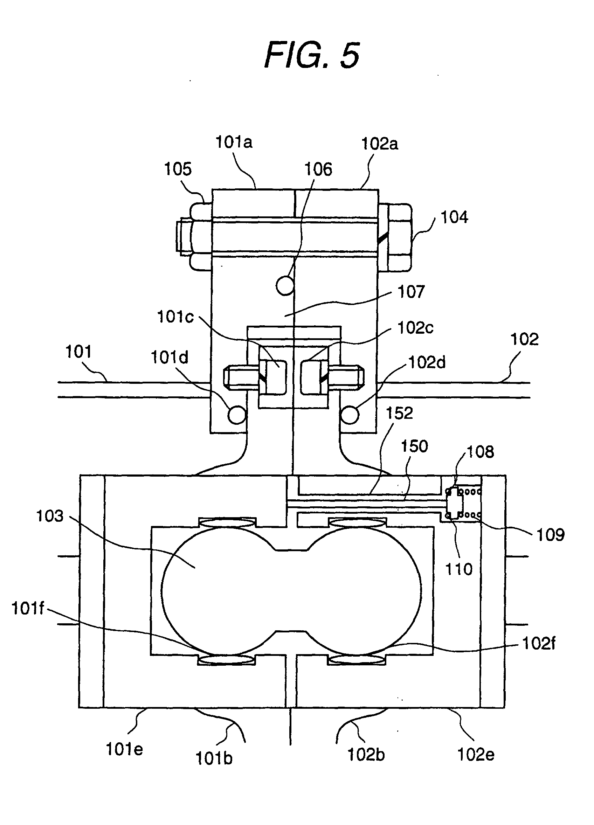

Fig. 1 is a sectional view showing a connection portion at which a bus gas container 101 and a bus gas container 102, which connect the lead portion 241 and the cable head 221, are combined. Fig. 4 is an enlarged sectional view of parts of the bus gas containers in Fig. 1 before connection, and Fig. 5 is an enlarged sectional view of part of the bus gas containers in Fig. 1 after connection thereof.

In Fig. 1, the bus gas containers 101, 102 each are a cylindrical metal container, and an insulating gas of high pressure is enclosed in each of the bus gas containers. The gas-insulated switchgear is divided at boundary surfaces of the bus gas containers 101, 102 when the gas-insulated switchgear is transported. Insulation spacers 101b, 102b, each of which is smaller in size than a diameter of a flange 101a, 102a of each bus gas container 101, 102, are connected to the flanges 101a, 102a by bolts 101c, 102c. O-rings 101d, 102d are arranged between the flange 101a and the insulation spacer 101b and between the flange 102a and the insulation spacer 102b, respectively, to seal gas inside the bus gas containers 101, 102. Center conductors 101e, 102e, each of which has a concave shape opened at an end thereof, are arranged, in parallel with each other in three phases, in inner sides of the insulation spacers 101b, 102b, and expansible contacts 101f, 102f each are built in a part of the concave shape of each of the center conductors 101e, 102e. The center conductors 101e, 102e are integrated with bus conductors 101g, 102g in the bus gas containers 101, 102, by bolts 101h, 102h, respectively. When the bus gas containers 101, 102 are connected each other and end to end, a conductor 103 forming a connecting conductor, being capable of auto connection (plug-in type) and having a spherical shape is inserted in the concave portion of the center conductor to keep it fixed in contact with the contact 102f, and then the bus gas container 101 is caused to approach to the bus gas container 102, the conductor 103 is pressed in the concave portion of the center conductor and joined to the contact 101f. The spherical conductor 103 is made in such a structure that is freely movable to some extent, and the contacts 101t, 102f are joined to the spherical conductor 103, whereby connection of conductors, that is, current passage can be secured.

Further, a communication hole 152 is formed in the center conductor 102e, and the communication hole 152 is closed by a check valve 108. The check valve 108 has a bar-like member 150 joined thereto which is movable in the communication hole 152. An O-ring 110 is provided on the check valve 108. The check valve 108 with the O-ring 110 is pressed on the center conductor 102e by the pressure of a spring 109 to chocks the communication hole 152 before the bus gas container 101 and the bus gas container 102 are joined, whereby hermetically sealing between the communication hole 152 and the bus gas container 102 is kept.

On the other hand, the bus gas container 101 and the bus gas container 102 are connected to each other by fastening the flanges 102a and 102a of them with bolts 104 and nuts 105, and gas sealing of the connection portion constructed by combining the bus gas containers 101, 102 after the connection is secured with an O-ring 106 of a hermetically sealing member.

Next, a method of removing the air remaining in the connection portion 107 into the outside of the containers when the bus gas containers 101, 102 are connected is explained in detail, referring to Figs. 4 and 5.

As shown in Fig. 4, the check valve 108 is tightly contacted with the center conductor 102e by the force of the spring 109 before connection of the bus gas containers 101 and 102, the gas sealing inside the bus gas container 102 is effected by the above-mentioned O-ring 102d and the O-ring 110 combined with the check valve 108. As the bus gas container 101 and the bus gas container 102 approach each other, the tip of the bar-like member 150 joined to. the check valve 108 is brought into contact with the center conductor 101e, the spring 109 is compressed and the check valve 108 separates from the center conductor 102e. At this time, the insulating gas of high pressure inside the bus gas container 102e flows into the connection portion 107 through the communication hole 152 provided in the center conductor 102e, whereby the air existing in the connection portion 107 is pressed out of the container from between the flanges 101a and 102a. At this time, the connection portion 107 is exposed to the insulating gas. Then, the bus gas container 101 and the bus gas container 102 are connected each other by fastening the flanges 101a and 102a of them with the bolts 104 and nuts 105, as shown in Fig. 3.

Thereby, the insulating gas is enclosed around the contacts 101f and 102f and the spherical conductor 103, further, the insulating gas is also enclosed in a gap between the insulation spacers 101b and 102b, so that air does not exist, differently from a conventional apparatus and insulation between the insulation spacers 101b, 102b and the connecting conductor constructed of the contacts 101f, 102f and the conductor 103 can be kept, and current does not flow even if voltage for use is applied. Further, since the insulating gas exists also between the insulation spacers 101a and 102a, the insulating condition therebetween also can be kept.

Therefore, hitherto, divided bus gas containers were assembled at the time of construction of the whole main buses of a gas-insulated switchgear, and then evacuation of the whole main buses assembled was effected and an insulating gas was enclosed therein to build an insulation condition of the buses. However, when the above-mentioned first embodiment is applied to a gas-insulated switchgear, by enclosing an insulating gas of several pressures in each bus gas container in advance, and removing the air remaining in the connection portion out of the container with insulating gas of high pressure in the bus gas container, the conventional evacuation working having done after assembling the main buses and the enclosure working of the insulating gas can be omitted, and the assembling process can be greatly reduced.

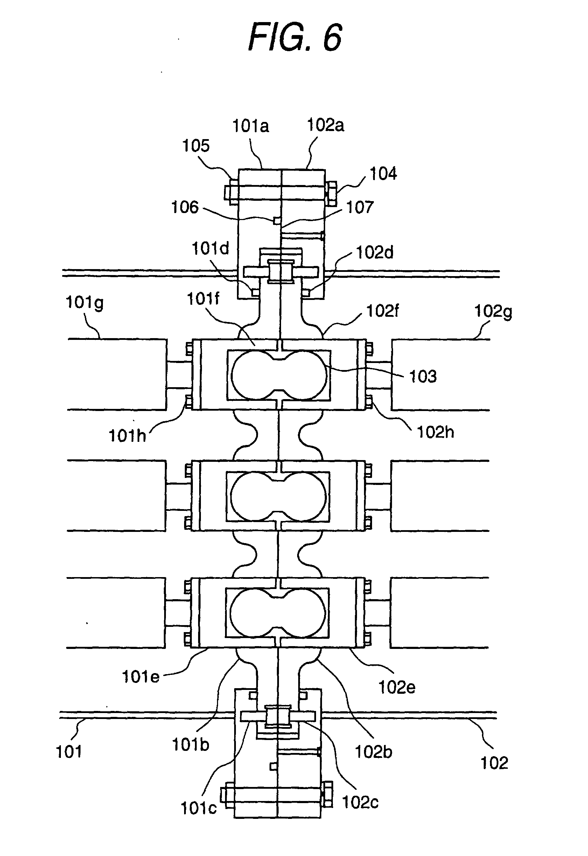

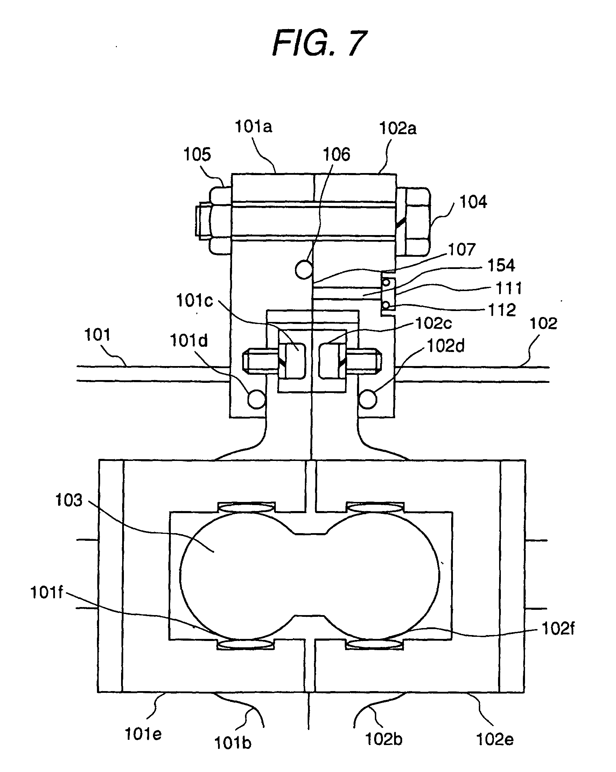

Fig. 6 is a sectional view showing the entire of a connection portion of a gas-insulated switchgear which is a second embodiment of the present invention. Fig. 7 is a view of an enlarged part of Fig. 6 after connection. Parts or portions of the same symbols as in the previously mentioned embodiment have the same structures, and explanation thereof is omitted.

In the present embodiment, a communication hole 154 communicating the atmosphere and the connection portion 107 is provided at a more inner position than the O-ring 106. A check valve 111 with an O-ring 112 is provided as a sealing member for closing the communication hole 154. The check valve 111 is opened after connection of the bus gas container 101 and the bus gas container 102, and air remaining in the connection portion is removed to be made vacuum, and then an insulating gas such as SF₆ is enclosed and the check valve 111 is closed, whereby the air remaining in the connection portion 107 at the time of connection is replaced by the insulating gas. Thereby, the effect that the insulation of the connection portion after connection can be remarkably raised can be attained.

Thereby, by applying the above-explained second embodiment to the divided surfaces of the gas insulated switch gear, the insulating gas inside the bus gas container 101 and the insulating gas inside the bus gas container 102 are hermetically enclosed by the O-ring 101d and the O-ring 102d, respectively, so that gas collection working after finishing of test at the factory and such working as enclosure of a desiccant for transportation can be omitted, and by opening the check valve 111 after connection of the bus gas containers, removing the air remaining in the connection portion and then enclosing the insulating gas, the air remaining in the connection portion 107 at the time of connection can be replaced by the insulating gas, so that it is unnecessary to effect the conventional working of evacuation of the whole main buses of the combined bus gas containers and the working of enclosure of an insulating gas, and it is sufficient to effect evacuation and insulation gas enclosure of only the connection portion, so that the working can be shortened.

In this manner, according to the present embodiment, since the insulating gas is enclosed in the surroundings of the connecting conductor in the same manner as in the previously mentioned embodiment, it becomes possible to maintain an insulating condition between the connection conductor and the insulation spacers, further, since the insulating gas exists also between the spacers 101a and 102a, the insulating condition can be maintained therebetween.

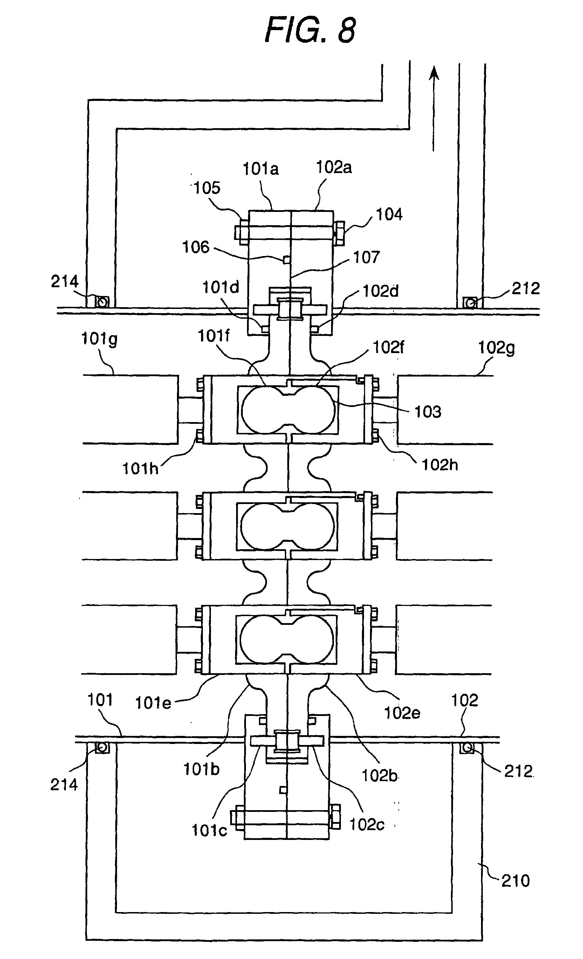

Fig. 8 shows an embodiment that the first embodiment previously mentioned is further improved. In this embodiment, a closed space is formed by a cylindrical hermetic wall 210 at the connection portion of the bus gas container 101 and the bus gas container 102. The hermetic wall 210 forms a hermetic condition to the outside by using, between it and the bus gas containers 101 and 102, members for maintaining a hermetic condition, such as circular O-rings 212, 214. In each previously mentioned embodiment, when an insulating gas is enclosed in the connection portion, such a hermetic wall is constructed in advance, whereby the insulating gas leaked from the connection portion can be collected by a suction pump without releasing it into the atmosphere.

Further, the following work is possible, that is, after the connection portion is covered with the hermetic wall, the inside thereof is made vacuum to some extend by the suction pump, and then each above-mentioned embodiment is practiced, whereby the air remaining in the connection portion at the time of enclosure of the insulating gas is reduced and the insulating performance of the connection portion can be raised.

Further, in the second embodiment, also, the above-mentioned embodiment can be practiced. In this case, even if such an accident that damage in the spacer, etc. occurs and the insulating gas contained in the bus gas containers is released out of the containers when the air is extracted by evacuation through the communication hole formed in the flange, or such an accident that the insulating gas is released out of the containers by mistake when the insulating gas is enclosed through the communication hole occurs, it becomes possible to collect the insulating gas to be released into the atmosphere by the hermetic chamber 210.

Further, in each above-mentioned embodiment, an example of the gas-insulated switchgear in which conductors in the containers are of three phase block type and arranged in parallel with each other is shown, however, each embodiment can be applied also to a gas-insulated switchgear in which the conductors are of three phase block type and arranged in a triangle or a gas-insulated switchgear of phase separation type.

In each previously mentioned embodiment, an example applied to the divided surface portions for transportation is shown, however, the embodiments each can be applied to a portion or portions to be increased or extended in future.

In a gas-insulated switchgear to be planed to increase, by having applied the first or second embodiment to an end portion in advance, forming an end face of an increased apparatus when increased in the same structure as formed previously, and using a connection conductor or conductors, an evacuation working at time of increase of the apparatus can be omitted, a filling operation of an insulating gas also can be minimized, so that process to be conducted at the site is shortened and the time of power stoppage accompanying the apparatus increase can be minimized.

In the gas-insulated switchgear according to the present invention, even in the case where bus gas containers in which an insulating gas enclosed in advance are combined to form a bus container, the insulating performance at the connection portion can be raised, whereby working of evacuation and enclosure of the insulating gas at the time of connection at the site is realized to be omitted or shortened, so that such effects can be attained that a gas treating operation in the factory and at the site can be made simple and the process at the site can be shortened.

### POSSIBILITY OF INDUSTRIAL UTILITY

The invention can be used for connection of bus containers, and various kind of gas-insulated switchgears, etc.

## Claims

1. A bus container comprising:
at least two bus gas containers, each of said bus containers having an open end and enclosing therein an insulating gas;
bus conductors contained in each of said bus gas containers; and
spacers supporting said bus conductors to said bus gas containers at open end portions, respectively, **characterized in that**
said bus gas containers are connected end to end, and a plurality of said bus conductors contained in one of said gas bus containers and a plurality of bus conductors contained in the other bus container are connected end to end, respectively,
connection portions of said bus conductors each include center conductors at ends of said bus conductors arranged end to end, and a connecting conductor connecting said center conductors, and
surroundings of said connecting conductors are filled with the insulating gas.

2. An bus container according to claim 1, **characterized in that** said center conductors each have a concave portion opened at an end thereof opposite to the end thereof on the bus conductor side and said connecting conductors each are formed in spherical shape so as to be fitted in said concave portions.

3. A bus container according to claim 1, **characterized in that** one of said center conductors is provided with a gas passage formed therein and communicable with the inside of said bus gas container and a mechanism mounted on said gas passage for causing said gas passage to open so as to communicate with the inside of said bus gas container under the condition that said bus gas containers are connected to each other and to be closed under the condition of nonconnection of said bus gas containers.

4. A bus container according to claim 3, **characterized in that** said mechanism mounted on said gas passage is a check valve.

5. A bus container according to claim 1, **characterized in that** said bus gas containers have flange portions at ends thereof, respectively, to be connected each other, one of said flange portions has a communication hole formed therein for communicating between the connection portion and the atmosphere, said communication hole being opened to release air from said connection portion to the atmosphere when said flanges are connected, and an insulating gas being enclosed in surroundings of said connecting conductors through said communication hole.

6. A bus container according to claim 5, **characterized in that** there is provided a hermetically sealing member for closing said communication hole after enclosing the insulating gas into the surroundings of said connecting conductor.

7. A bus container comprising:
bus gas containers each having an insulating gas contained herein and a flange portion at an end thereof;
bus conductors contained in each of said bus gas containers; and
spacers supporting said bus conductors,
**characterized in that**
said bus gas containers are connected to each other, and a plurality of said bus conductors and a plurality of bus conductors are connected end to end, respectively,
connection portions of said bus conductors each include center conductors disposed at opposite ends of said bus conductors and supported by said spacers, and a connecting conductor connecting said center conductors,
at least one of said bus gas containers has a hermetically sealing member at the flange portion thereof and the insulating gas is enclosed in contact surfaces between said spacers at a more inner side than said hermetically sealing member.

8. A bus container comprising:
bus gas containers each having an insulating gas enclosed therein;
bus conductors contained in each of said bus gas containers; and
spacers supporting said bus conductors, **characterized in that**
said bus gas containers are connected to each other, and a plurality of said bus conductors and a plurality of bus conductors are connected end to end, respectively,
their connection portions are filled with the insulating gas.

9. A bus container comprising:
bus gas containers each enclosing therein an insulating gas;
bus conductors contained in each of said bus gas containers; and
spacers supporting said bus conductors, **characterized in that**
said bus gas containers are connected to each other, and a plurality of said bus conductors and a plurality of bus conductors are connected end to end, respectively,
connection portions of said bus conductors each have center conductors at ends of said bus conductors, and a connecting conductor connecting said center connectors, and each are formed so that surroundings of said connecting conductors are filled with the insulating gas, and
a hermetically sealing container surrounding said connection portions and forming a hermetically sealing condition is provided outside the connection portion of said bus gas containers.

10. A gas-insulated switchgear comprising a circuit breaker and a disconnecting switch, said circuit breaker and disconnecting switch being connected each other through buses, and insulated with an insulating gas, wherein
a bus container for gas-insulating said bus is said bus container according to any one of claims 1 to 9.

11. A method of assembling a bus container by connecting a plurality of bus gas containers each containing therein bus conductors and an insulating gas and said bus conductors, **characterized in that** said bus conductors are connected end to end under the condition that the insulating gas is enclosed in said bus gas containers while leading the insulating gas in said bus gas container into connection portions of said gas bus conductors and when the connection is finished, the gas is intervened in said connection portions.

12. A method of assembling a bus container by connecting a plurality of bus gas containers in which bus conductors and an insulating gas are contained and said bus conductors, **characterized in that** said bus conductors are connected end to end and said bus gas containers are connected end to end under the condition that the insulating gas is enclosed in said bus gas containers, the air existing in the connection portions of said bus conductors and the connection portion of said bus gas containers is extracted therefrom after the connection, and then the insulating gas is introduced and hermetically sealed in said connection portions.

13. A bus container assembling method according to claim 12, **characterized in that** the extraction of air from said connection portions and the enclosure of the insulating gas are effected through a communication hole provided in a flange of an end of one of said bus gas containers.
